# EUROPÄISCHE PATENTANMELDUNG

(11) **EP 4 530 610 A1**
(43) Veröffentlichungstag der Anmeldung: **02.04.2025**
(21) Anmeldenummer: 24158783.1
(22) Anmeldetag: 21.02.2024
(51) Int. Cl.: G01N 21/53, G08B 17/103

(54) **GRUNDGERÄT MIT PARTIKELDETEKTIONSEINHEIT UND FILTERN**

(30) Priorität: 28.09.2023 EP 23200490
(71) Anmelder: Wagner Group GmbH, 30853 Langenhagen (BD)
(72) Erfinder: Janz, Marcel, 30938 Großburgwedel (DE); Knoth, Nikolai, 31157 Sarstedt (DE)
(74) Vertreter: Götz, Gudrun Veronika

(57) **Zusammenfassung**

Die Erfindung betrifft eine Partikeldetektionseinheit (100), die zur Verwendung mit einem einen Eintrittskanal (240) und einen Austrittskanal (250) aufweisenden Grundgerät (200) für ein Ansaugpartikelerkennungssystem ausgebildet, aufweisend ein Gehäuse (110), mit einer darin angeordneten Detektionskammer (120), die einen in die Detektionskammer (120) führenden Strömungseinlass (121) und einen aus der Detektionskammer (120) führenden Strömungsauslass (122) umfasst, und erste Kopplungsmittel (130) zur lösbaren Verbindung mit zweiten Kopplungsmitteln (230) des Grundgeräts (200), wodurch der Strömungseinlass (121) mit einem Eintrittskanalauslass (242) und der Strömungsauslass (122) mit einem Austrittskanaleinlass (251) des Grundgeräts (200) fluidleitend verbindbar ist. Es ist die Aufgabe der Erfindung eine Partikeldetektionseinheit zur Verwendung in einem Grundgerät für ein Ansaugpartikelerkennungssystem zu schaffen, die einer Kontaminierung der Detektionskammer sowie Verschmutzungen der optischen Komponenten zuverlässig und mit nur geringem Wartungsaufwand vorbeugt. Die Aufgabe wird dadurch gelöst, dass bei Verwendung mit dem Grundgerät (200) der in die Detektionskammer (120) führende Strömungseinlass (121) an eine im Eintrittskanalauslass (242) des Grundgeräts (200) ausgebildete erste Filteraufnahme (241) zur Aufnahme eines Strömungseinlassfilters (310) und der aus der Detektionskammer (120) führende Strömungsauslass (122) an eine im Austrittskanaleinlass (251) des Grundgeräts (200) ausgebildete zweite Filteraufnahme (252) zur Aufnahme eines Strömungsauslassfilters (320) derart angrenzend ausgebildet ist, dass der Strömungseinlass (121) durch einen von der ersten Filteraufnahme (241) aufgenommenen Strömungseinlassfilter (310) und der Strömungsauslass (122) durch einen von der zweiten Filteraufnahme (242) aufgenommenen Strömungsauslassfilter (320) vollständig bedeckt ist.

## Beschreibung

Die Erfindung betrifft eine Partikeldetektionseinheit, die zur Verwendung mit einem einen Eintrittskanal und einen Austrittskanal aufweisenden Grundgerät für ein Ansaugpartikelerkennungssystem ausgebildet ist. Die Partikeldetektionseinheit weist ein Gehäuse, mit einer darin angeordneten Detektionskammer, die einen in die Detektionskammer führenden Strömungseinlass und einen aus der Detektionskammer führenden Strömungsauslass umfasst auf, und erste Kopplungsmittel zur lösbaren Verbindung mit zweiten Kopplungsmitteln des Grundgeräts, wodurch der Strömungseinlass mit einem Eintrittskanalauslass und der Strömungsauslass mit einem Austrittskanaleinlass des Grundgeräts fluidleitend verbindbar ist.

Die Erfindung betrifft außerdem ein Grundgerät für ein Ansaugpartikelerkennungssystem, das zur Verwendung mit einer derartigen Partikeldetektionseinheit ausgebildet ist, und einen Modulsatz mit einem Grundgerät, mindestens einer Partikeldetektionseinheit und Filtern.

Partikeldetektionseinheiten werden oftmals für die Branderkennung, insbesondere in Gebäuden, Fahrzeugen, auf Schiffen usw. eingesetzt, wobei in der Umgebungsluft eines Überwachungsbereichs enthaltene Partikel, bspw. Rauchpartikel oder auch Aerosole, die auf einen Brand oder dessen Entstehung schließen lassen, mittels der Partikeldetektionseinheit erkannt werden. Bei einem Überwachungsbereich handelt es sich in der Regel um einen zu überwachenden Bereich, in dem sich Personen aufhalten, (wertvolle) Güter lagern und/oder eine erhöhte Brandgefahr besteht. Überwachungsbereiche können Teile eines Gebäudes, wie Räume, Lagerräume oder Serverräume sein, Teile eines Fahrzeugs, bspw. eines Schiffs, Zugs, Busses oder Flugzeugs, wie Fahrgastabteile oder Maschinenräume, aber auch ein Bereich in unmittelbarer Umgebung oder innerhalb eines Objekts, wie einer Maschine oder eines Schaltschranks.

Zur Erkennung von Partikeln befindet sich im Inneren des Gehäuses der Partikeldetektionseinheit die mit der Umgebungsluft in fluidleitendem Austausch stehende Detektionskammer. Der tatsächliche Detektionsbereich, innerhalb dessen mit der Umgebungsluft in die Detektionskammer transportierte Partikel erfasst werden können, wird üblicherweise durch Überlagerung von Lichtstrahlen eines Lichtsenders und des Einfallsbereichs eines Lichtempfängers innerhalb der Detektionskammer definiert. Bei der Detektion werden die Partikel durch das vom Lichtsender ausgesendete Licht angestrahlt und können entweder anhand des durch die Partikel reduzierten Durchlichts (Durchlichtdetektor) oder aber anhand des an den Partikeln gestreuten Streulichts (Streulichtdetektor) vom Lichtempfänger erkannt werden. Um sicherzustellen, dass ausschließlich das vom Lichtsender gesendete Licht die im Detektionsbereich befindlichen Partikel erreicht, ist die Detektionskammer von Umgebungslicht abgeschirmt.

Ein bekannter Anwendungsfall für die Verwendung von Partikeldetektionseinheiten sind Ansaugrauchmelder, auch als Ansaugpartikelerkennungssysteme bezeichnet. Ein Ansaugpartikelerkennungssystem umfasst mindestens eine Rohr- und/oder Schlauchleitung, die über eine oder mehrere Ansaugöffnungen zur jeweiligen Entnahme einer Fluid-, insbesondere einer Luftprobe, in einen oder mehrere Überwachungsbereiche mündet. Mehrere Überwachungsbereiche können zum Beispiel in unterschiedlichen Bereichen desselben Raums, wie einer (großen) Lagerhalle angeordnet sein, aber auch in jeweiligen Räumen eines Gebäudes oder Abschnitten eines Fahrzeugs, wie den Fahrgastkabinen eines Schiffes. Die entnommenen Fluidproben werden entlang der Rohr- und/oder Schlauchleitung zur Partikeldetektionseinheit transportiert und in die Detektionskammer eingeleitet. Bei Verwendung eines Ansaugpartikelerkennungssystems mit mehreren, separaten Rohr- und/oder Schlauchleitungen, die jeweils einen oder mehrere "Äste" aufweisen, kann jede der Rohr- und/oder Schlauchleitungen mit einer jeweiligen Partikeldetektionseinheit verbunden sein, die Partikeldetektionseinheiten werden dann auch Detektormodule genannt. Ein typischerweise bei Ansaugpartikelerkennungssystemen auftretendes Problem ist, dass in der kontinuierlich angesaugten und in die Detektionskammer eingeleiteten Luft, auch dann, wenn kein Brandfall vorliegt, Partikel und/oder Aerosole wie Staub, Schmutz usw. enthalten sind, die über längere Betriebsdauern hinweg zu Verschmutzungen der optischen Komponenten und so zu einer Abnahme der Detektionsleistung führen.

Aus dem Stand der Technik, nämlich den Offenlegungsschriften EP 4 099 285 A1 und EP 4 099 286 A1 ist ein solches aspiratives Branderkennungssystem mit zwei Rohrleitungen und einem hier als Ansaugraucherkennungsgerät bezeichneten Grundgerät bekannt. Das Grundgerät umfasst eine gedruckte Leiterplatte (PCB = **P**rinted **C**ircuit **B**oard) und einen sogenannten Verteiler der die modulare Verwendung von wahlweise einem oder zwei Sensorköpfen ermöglicht. Als Sensorköpfe sollen bspw. auf dem Streulichtprinzip basierende Partikeldetektionseinheiten verwendet werden. Der Verteiler weist hierzu ein erstes und ein zweites Sensorkopfgehäuse auf, die über jeweilige Strömungskanäle mit einem Lüftergehäuse verbunden sind. Ein jeweiliger Einlass des ersten und des zweiten Sensorkopfgehäuses ist mit je einer der Rohrleitungen verbunden. Im Betrieb des aspirativen Branderkennungssystems wird durch den im Lüftergehäuse platzierten Lüfter ein Unterdruck erzeugt, sodass Luft entlang der Rohrleitungen und entlang der Strömungskanäle, durch die jeweiligen Sensorkopfgehäuse und die darin befindlichen Sensorköpfe angesaugt wird. Über einen Auslass des Lüftergehäuses, kann die angesaugte Luft wieder in die Umgebung austreten. Um den Druckverlust während des Betriebs zu minimieren und so die für die Partikeldetektion erforderliche Strömungsmenge durch die Sensorkopfgehäuse bzw. die darin befindlichen Sensorköpfe zu gewährleisten, sind die Sensorkopfgehäuse mit einem Deckel und einer dazwischenliegenden Dichtung luftdicht verschlossen.

Mittels eines Filters sollen ferner Schmutz und Staub aus der über die Einlässe der Sensorkopfgehäuse angesaugten Luft herausgefiltert werden. Hierzu umfasst der Verteiler unmittelbar stromabwärts eines jeweiligen Einlasses zwei Steckplätze zur Aufnahme des Filters und eines Sensorkopfschutzes. Zur Wartung des Branderkennungssystems soll auch ein regelmäßiger Wechsel bzw. die Reinigung des Filters stattfinden. Hierzu muss zunächst das jeweilige Sensorkopfgehäuse geöffnet, d. h. dessen Deckel entfernt werden. Anschließend wird der Sensorkopfschutz in den Steckplatz zwischen Filter und Sensorkopf gesteckt, sodass sich vom Filter ablösender Staub oder Schmutz nicht zum Sensorkopf gelangen kann. Insgesamt ist der Filterwechsel aufwendig. Um Zugang zum Filter zu erlangen, muss nämlich die zwischen Deckel und Sensorkopfgehäuse liegende Dichtung gelöst werden, was bei unsachgemäßer Handhabung zu Undichtigkeiten des Sensorkopfgehäuses und Verschmutzungen des Sensorkopfes führen kann.

Auch aus der WO 97/42486 A1 ist ein ähnliches Ansaugpartikelerkennungssystem zur Branderkennung mit mehreren Probenahmeleitungen bekannt. Die Probenahmeleitungen führen zu einem Einlassverteiler eines gemeinsamen Grundgeräts, welches außerdem noch ein Ansauggerät, einen Filter und einen Rauchdetektor in Form einer Partikeldetektionseinheit umfasst. Das Ansauggerät erzeugt eine Strömung, wodurch Luft über die Probenahmeleitungen angesaugt und mittels des Filters grobgefiltert wird, bevor die Luft zur Erkennung etwaiger darin enthaltener Rauchpartikel dem Rauchdetektor zugeführt wird. Der Rauchdetektor umfasst eine zylindrische Detektionskammer, in deren einem Ende ein Lichtsender, nämlich eine LASER Diode zur Erzeugung eines die Detektionskammer in axialer Richtung durchsetzenden Lichtstrahls, und in deren anderem Ende ein Lichtabsorber, der den Lichtstrahl absorbiert angeordnet ist. Ein Strömungseinlass und ein Strömungsauslass der Detektionskammer sind an deren Mantelfläche, einander gegenüberliegend ausgebildet, sodass die über die Probenahmeleitungen angesaugte Luft radial in die zylindrische Detektionskammer ein- bzw. austritt, und den Lichtstrahl dabei durchströmt. Zur Partikeldetektion ist ein Photodetektor einen Streulichtwinkel mit dem Lichtstrahl einschließend ebenfalls innerhalb der Detektionskammer positioniert, sodass an in der dort befindlichen Luft enthaltenen Rauchpartikeln gestreute Lichtstrahlen von diesem erfasst werden können.

Eine Verschmutzung der optischen Komponenten einer Partikeldetektionseinheit kann aber nicht nur durch die im Betrieb des Ansaugpartikelerkennungssystems in der angesaugten Luft enthaltenen Partikel verursacht werden. Auch außerhalb der Betriebszeiten, wenn gerade keine Luftströmung erzeugt wird, bspw. in der Bauphase, insbesondere in der Zeit von der Installation bis zur Inbetriebnahme des Ansaugpartikelerkennungssystems oder bei der Durchführung von Wartungsarbeiten, können Insekten oder Spinnen ins Innere der Detektionskammer gelangen. Aus der EP 4 213 122 A1 ist ein Detektormodul eines Ansaugpartikelerkennungssystems bekannt, dessen Strömungseinlass mit einem Insektenschutz versehen ist. Der Insektenschutz ist als spiralförmig gewickelter Draht realisiert, der die im Betrieb angesaugte Luft mit möglichst geringem Strömungswiderstand passieren lässt, jedoch ein Eindringen von Insekten oder Spinnen über den Strömungseinlass ins Innere der Detektionskammer vermeidet. Nachteilig ist an der vorgeschlagenen Lösung, dass der Insektenschutz keine Filterwirkung gegenüber Schmutz- oder Staubpartikeln aufweist, was wiederum zu einer erhöhten Verschmutzung der optischen Komponenten des Detektormoduls durch die während der Betriebszeiten angesaugte Luft führt.

Eine modulare Umsetzung eines Ansaugraucherkennungssystems welches gleichzeitig auch zur Verbesserung der Luftqualität beitragen soll, ist aus der EP 3 985 632 A1 bekannt. Bei dem Ansaugraucherkennungssystem ist eine Vielzahl von Ansaugöffnungen, hier auch als Ansaugpunkte bezeichnet, in verschiedenen Bereichen eines Gebäudes angeordnet. Jeder Ansaugpunkt ist dabei durch eine eigene Ansaugleitung mit einer jeweiligen Partikeldetektionseinheit, der sogenannten Partikelsensorkammer verbunden. Die Partikelsensorkammern sind in einer zentralen Detektorstelle modular zusammengefasst, wobei immer zwei Ansaugleitungen in ein gemeinsames Grundgerät, das Detektormodul führen. Gehäuseeinlässe und Gehäuseauslässe des Detektormoduls sind hier jeweils an dessen Vorderseite angeordnet, an der gegenüberliegenden Rückseite ist, anders als bei herkömmlichen Ansaugraucherkennungssystemen, bei denen die angesaugte Luftprobe nach der Detektion in die (Außen-)Umgebung abgelassen wird, ein Luftfilter angeordnet, der zur Verbesserung der Luftqualität feinste Partikel, wie mitgeführten Staub, Pollen, Viren und Bakterien herausfiltern soll. Zum Wechseln des Filters kann dieser vom Detektormodul gelöst werden. Innerhalb des Detektormoduls verlaufen insgesamt zwei separate Strömungspfade, für jeden Ansaugpunkt bzw. für jede angeschlossene Ansaugleitung einer. Die vom Ansaugpunkt angesaugte Luftprobe tritt dabei zunächst an der Vorderseite in das Detektormodul ein, wird darin, über einen Luftkanal, zum Strömungseinlass der zugeordneten Partikelsensorkammer geleitet und tritt durch den gegenüberliegend angeordneten Strömungsauslass der Partikelsensorkammer, also in derselben Strömungsrichtung aus dieser aus. An den Strömungsauslass der Partikelsensorkammer schließt sich wiederum ein Luftkanal an, der die Luftprobe zum mit dem Detektormodul verbundenen Filter führt. Nach Durchströmen des Filters wird die Luftprobe erneut durch das Detektormodul, diesmal durch eine ebenfalls darin enthaltene Luftstromsensorkammer geführt und anschließend in den entsprechenden Gebäudebereich zurückgeleitet. Eine Filterung der eingangs zugeführten Luftprobe, bevor diese in die Partikelsensorkammer eintritt, ist allerdings nicht vorgesehen, und mit der vorgeschlagenen Anordnung, bei der sich der Filter am Ende des Detektormoduls befindet, auch gar nicht möglich. Zudem sind die beiden, in einem Detektormodul enthaltenen Partikelsensorkammern fest verbaut, können also nicht einfach entnommen und folglich auch nicht separat gewechselt werden. Die ungefiltert in die Partikelsensorkammern eintretenden Luftproben führen zu einer schnelleren Verschmutzung und die Verwendung zweier fest verbauter Partikelsensorkammern verdoppelt die Ausfallwahrscheinlichkeit des Detektormoduls, wodurch der Wartungsaufwand erheblich erhöht wird.

Insgesamt nachteilig am Stand der Technik ist außerdem, dass stets nur einer der beiden Zugänge zur Detektionskammer durch einen Filter oder Insektenschutz abgedeckt ist. Über den jeweils anderen Zugang können daher, nicht nur während der Betriebszeiten, nämlich dann wenn durch das Strömungsmittel eine kontinuierliche Luftströmung erzeugt wird, sondern auch außerhalb der Betriebszeiten, wenn gerade keine Luftströmung erzeugt wird, bspw. in der Bauphase, insbesondere in der Zeit von der Installation bis zur Inbetriebnahme des Ansaugpartikelerkennungssystems oder bei der Durchführung von Wartungsarbeiten, Verschmutzungen, Insekten oder Spinnen ins Innere der Detektionskammer gelangen und so zu erheblichen Beeinträchtigungen der Detektionsgenauigkeit führen.

Es ist daher die Aufgabe der vorliegenden Erfindung, die Nachteile aus dem Stand der Technik zu eliminieren und eine Partikeldetektionseinheit zur Verwendung in einem Grundgerät für ein Ansaugpartikelerkennungssystem zu schaffen, die einer Kontaminierung der Detektionskammer sowie Verschmutzungen der optischen Komponenten zuverlässig und mit nur geringem Wartungsaufwand vorbeugt.

Die Aufgabe wird gelöst durch eine Partikeldetektionseinheit gemäß Anspruch 1, ein Grundgerät gemäß Anspruch 8 und einen Modulsatz gemäß Anspruch 16 für ein Ansaugpartikelerkennungssystem.

Eine Partikeldetektionseinheit der eingangs näher beschriebenen Art kennzeichnet sich dadurch, dass bei Verwendung mit einem erfindungsgemäßen Grundgerät, insbesondere durch Koppeln mit dem Grundgerät, der in die Detektionskammer führende Strömungseinlass an eine im Eintrittskanalauslass des Grundgeräts ausgebildete erste Filteraufnahme zur Aufnahme eines Strömungseinlassfilters und der aus der Detektionskammer führende Strömungsauslass an eine im Austrittskanaleinlass des Grundgeräts ausgebildete zweite Filteraufnahme zur Aufnahme eines Strömungsauslassfilters derart angrenzend ausgebildet ist, dass der Strömungseinlass durch einen von der ersten Filteraufnahme aufgenommenen Strömungseinlassfilter und der Strömungsauslass durch einen von der zweiten Filteraufnahme aufgenommenen Strömungsauslassfilter vollständig bedeckt ist.

Erfindungsgemäß ist folglich vorgesehen, nicht nur einen der Zugänge zur Detektionskammer, sondern beide oder alle Zugänge so auszubilden, dass sofern die Partikeldetektionseinheit mit dem Grundgerät gekoppelt ist, die jeweiligen Kopplungsmittel also miteinander verbunden sind, sowohl der Strömungseinlass als auch der Strömungsauslass mit einem jeweils zugeordneten Filter, d. h. einem dem Strömungseinlass zugeordneten Strömungseinlassfilter und einem dem Strömungsauslass zugeordneten Strömungsauslassfilter vollständig bedeckt sind. Um einen einfachen Filterwechsel, auch beider oder aller Filter gleichzeitig zu ermöglichen, sind die jeweiligen Filteraufnahmen an der Verbindungsstelle zwischen Partikeldetektionseinheit und einem mit der Partikeldetektionseinheit verbindbaren oder koppelbaren Grundgerät angeordnet, und zwar im Eintrittskanalauslass bzw. im Austrittskanaleinlass des Grundgeräts. Durch Herausnehmen bzw. Entkoppeln der Partikeldetektionseinheit vom Grundgerät sind beide oder alle Filteraufnahmen leicht zugänglich, sodass darin aufgenommene Filter in einfacher Weise, auch ohne zusätzliche Werkzeuge, entnommen oder eingesetzt werden können.

Die Filter wirken dabei nicht nur als Grobfilter gegenüber gröberen Schmutz- oder Staubpartikeln oder Aerosolen, sondern gleichzeitig auch als Insektenschutz, sodass das Eindringen von Verschmutzungen, Insekten und/oder Spinnen ins Innere der Detektionskammer über beide Zugänge, sowohl über den Strömungseinlass als auch über den Strömungsauslass vermieden wird. Die Filterwirkung tritt dabei vor allem während der Betriebszeiten ein, d. h. sofern im Normalbetrieb eine kontinuierliche Fluidströmung über den Strömungseinlass ins Innere der Detektionskammer ein- und über den Strömungsauslass wieder austritt oder bei einer Strömungsumkehr, bspw. zur Überprüfung der angeschlossenen Rohrleitungen auf Dichtigkeit oder zur Lokalisierung von Brandherden, d. h. sofern die Fluidströmung über den Strömungsauslass eintritt und über den Strömungseinlass austritt. Ein Schutz vor Insekten und Spinnen ist hingegen vor allem außerhalb der Betriebszeiten relevant, sofern gerade keine Fluidströmung erzeugt wird, also bspw. bei der Installation, Inbetriebnahme oder während Wartungsarbeiten.

Damit eine vollständige Abdeckung der jeweiligen Querschnittsflächen durch von den Filteraufnahmen aufgenommene Filter erfolgt, können der Strömungseinlass und der Strömungsauslass derart an der Partikeldetektionseinheit positioniert sein, dass bei miteinander verbundenen Kopplungsmitteln der Strömungseinlass an den Eintrittskanalauslass und der Strömungsauslass an den Austrittskanaleinlass angrenzt, sich die jeweiligen Querschnittsflächen mit den Querschnittsflächen des Eintrittskanalauslasses bzw. des Austrittskanaleinlasses decken.

Nach einer vorteilhaften Erfindungsausgestaltung sind der in die Detektionskammer führende Strömungseinlass und der aus der Detektionskammer führende Strömungsauslass an derselben Seite, der Vorderseite der Partikeldetektionseinheit, insbesondere an einer gemeinsamen Gehäuseaußenfläche und/oder in einer gemeinsamen Ebene, zueinander benachbart angeordnet und zueinander parallel ausgerichtet.

Bei dieser Erfindungsausgestaltung ist es vorteilhaft, wenn das Grundgerät eine der Vorderseite entsprechende Innenseite mit komplementär zum Strömungseinlass angeordnetem Eintrittskanalauslass und komplementär zum Strömungsauslass angeordnetem Austrittskanaleinlass aufweist, die bei miteinander verbundenen Kopplungsmitteln parallel zur Vorderseite der Partikeldetektionseinheit verläuft. Indem beide Zugänge zur Detektionskammer an der Vorderseite der Partikeldetektionseinheit angeordnet sind, kann diese beim Herausnehmen aus dem Grundgerät, bspw. für Wartungsarbeiten oder zum Filterwechsel "nach unten" gehalten werden, wodurch ein Eindringen von Verschmutzungen oder Staub erschwert wird.

Vorzugsweise und in Weiterbildung dieser Erfindungsausgestaltung ist die Detektionskammer zur Umlenkung einer darin verlaufenden Fluidströmung ausgebildet, sodass eine in einer ersten Strömungsrichtung über den Strömungseinlass in die Detektionskammer eintretende Fluidströmung in einer, der ersten Strömungsrichtung entgegengerichteten zweiten Strömungsrichtung über den Strömungsauslass aus der Detektionskammer austritt. Bei Verwendung mit dem Grundgerät und im Normalbetrieb verlaufen dann die über den Strömungseinlass in die Detektionskammer eintretende und die über den Strömungsauslass aus der Detektionskammer austretende Fluidströmung im Wesentlichen parallel zueinander, jedoch in entgegengesetzter Strömungsrichtung.

Die Detektionskammer kann dabei einem in etwa U-förmigen Verlauf folgend ausgebildet sein, wobei der Strömungseinlass an einen ersten U-Schenkel und der Strömungsauslass an einen zweiten U-Schenkel anschließt. Beispielsweise könnte die Detektionskammer in der Art eines doppelt gebogenen Strömungskanals konstruiert sein, sodass eine in der ersten Strömungsrichtung über den Strömungseinlass eintretende Fluidströmung um etwa 90° in Richtung des Detektionsbereichs umgelenkt und nach Durchströmen des Detektionsbereichs erneut um etwa 90° in Richtung des Strömungsauslass umgelenkt wird. Diese Konfiguration ermöglicht eine besonders kompakte Bauweise der Partikeldetektionseinheit und folglich auch einen geringeren Platzbedarf innerhalb des Grundgeräts.

In einer optionalen Erfindungsvariante weisen der Strömungseinlass und der Strömungsauslass jeweils eine mit dem Eintrittskanalauslass bzw. dem Austrittskanaleinlass des Grundgeräts fluiddichtend zusammenwirkende Dichtung auf. Die Dichtung ist vorzugsweise elastisch und fest mit der Partikeldetektionseinheit verbunden, kann bspw. mit dem Strömungseinlass bzw. Strömungsauslass verklebt sein. Bei Verwendung bzw. durch Koppeln mit dem Grundgerät ist dann jeweils eine Dichtung zwischen dem Strömungseinlass und dem Eintrittskanalauslass sowie zwischen dem Strömungsauslass und dem Austrittskanaleinlass positioniert, wodurch im Normalbetrieb ausschließlich die den Eintrittskanaleinlass und den in der dortigen Filteraufnahme angeordneten Strömungseinlassfilter passierende Fluidströmung oder auch, bei Betrieb mit umgekehrter Strömungsrichtung, ausschließlich die den Austrittskanaleinlass und den in der dortigen Filteraufnahme angeordneten Strömungsauslassfilter passierende Fluidströmung ins Innere der Detektionskammer gelangt. Eine Abdichtung des vollständigen Grundgeräts gegenüber der Umgebung ist dadurch nicht erforderlich.

Bei einer anderen, ebenfalls optionalen Erfindungsvariante umfasst die Partikeldetektionseinheit eine Leiterplatte, deren elektrische Anschlüsse mit elektrischen Anschlüssen des Grundgeräts signalleitend verbindbar sind. Beispielsweise kann die Leiterplatte hierzu mit dritten Kopplungsmitteln versehen sein, die mit vierten Kopplungsmitteln des Grundgeräts lösbar verbindbar sind, sodass sofern die dritten Kopplungsmittel mit den vierten Kopplungsmitteln verbunden sind, gleichzeitig auch die jeweiligen elektrischen Anschlüsse der Partikeldetektionseinheit bzw. der Leiterplatte und des Grundgeräts signalleitend miteinander verbunden sind.

Schließlich sind nach einer beispielhaften Ausgestaltung die ersten Kopplungsmittel der Partikeldetektionseinheit mit den zweiten Kopplungsmitteln des Grundgeräts selbstausrichtend verbindbar, sodass durch Koppeln mit dem Grundgerät, sofern die ersten Kopplungsmittel mit den zweiten Kopplungsmitteln verbunden sind, gleichzeitig auch der in die Detektionskammer der Partikeldetektionseinheit führende Strömungseinlass mit dem Eintrittskanalauslass des Grundgeräts und der aus der Detektionskammer der Partikeldetektionseinheit führende Strömungsauslass mit dem Austrittskanaleinlass des Grundgeräts fluchtend und an die erste bzw. zweite Filteraufnahme entweder unmittelbar oder auch mittelbar über dazwischen liegende Dichtungen angrenzend ausgerichtet sind. Zum Beispiel können die ersten und die zweiten Kopplungsmittel als formschlüssige Schnappverbindung im sogenannten "Click und Release-Design" konstruiert sein, sodass die Partikeldetektionseinheit einhändig in das Grundgerät eingesteckt bzw. eingeschnappt oder darin verrastet und auch einhändig wieder aus dem Grundgerät entfernt werden kann. Hierbei ist es vorteilhaft, dass die ersten und die zweiten Kopplungsmittel so konstruiert sind, dass eine Verbindung, insbesondere ein Einschnappen nur dann möglich ist, sofern der Strömungseinlass und der Eintrittskanalauslass bzw. der Strömungsauslass und der Austrittskanaleinlass einen gemeinsamen Strömungskanal bildend, zueinander fluchtend aneinander anschließen. Bspw. weist die Vorderseite der Partikeldetektionseinheit ein erstes Flächenprofil und die Innenseite des Grundgeräts ein dazu komplementär verlaufendes zweites Flächenprofil auf, sodass die Vorderseite und die Innenseite formschlüssig bzw. puzzleteilartig ineinandergreifen. In besonders vorteilhafter Weiterbildung wird durch Verbinden der ersten Kopplungsmittel mit den zweiten Kopplungsmitteln auch gleichzeitig eine signalleitende Verbindung zwischen jeweiligen elektrischen Anschlüssen einer Leiterplatte der Partikeldetektionseinheit und elektrischen Anschlüssen des Grundgeräts hergestellt.

Die eingangs gestellte Erfindungsaufgabe wird außerdem durch ein Grundgerät für ein Ansaugpartikelerkennungssystem gelöst, das zur Verwendung mit mindestens einer Partikeldetektionseinheit nach einer der zuvor beschriebenen Ausführungsformen geeignet ist. Das Grundgerät weist ein Außengehäuse mit mindestens einem externen, am Außengehäuse angeordneten Gehäuseeinlass zur Verbindung mit einer Rohr- und/oder Schlauchleitung des Ansaugpartikelerkennungssystems und mindestens einem ebenfalls externen, am Außengehäuse angeordneten Gehäuseauslass sowie mindestens eine Detektormodulaufnahme auf. Die Detektormodulaufnahme umfasst zweite Kopplungsmittel, die zur lösbaren Verbindung mit den ersten Kopplungsmitteln der Partikeldetektionseinheit konfiguriert sind. Bspw. ist die Detektormodulaufnahme in der Art eines Steckplatzes ausgebildet, in welchen die Partikeldetektionseinheit eingesteckt oder eingeschnappt und darin verrastet werden kann. Hierzu können die ersten Kopplungsmittel als elastisch verformbare Schnappmittel und die zweiten Kopplungsmittel als Aufnahmemittel ausgebildet sein, sodass die ersten Kopplungsmittel in die zweiten Kopplungsmittel formschlüssig einschnappbar sind.

Das Grundgerät kennzeichnet sich dadurch, dass die mindestens eine Detektormodulaufnahme einen internen, innerhalb des Außengehäuses liegenden Eintrittskanalauslass und einen ebenfalls internen, innerhalb des Außengehäuses liegenden Austrittskanaleinlass umfasst. Zwischen dem externen Gehäuseeinlass und dem internen Eintrittskanalauslass verläuft ein Eintrittskanal, über den die im Normalbetrieb des Ansaugpartikelerkennungssystems erzeugte Fluidströmung zur Partikeldetektionseinheit hingeführt wird. Zwischen dem internen Austrittskanaleinlass und dem externen Gehäuseauslass verläuft ein Austrittskanal, über den die Fluidströmung nach Durchströmen der Partikeldetektionseinheit von dieser weggeführt wird.

Im Eintrittskanalauslass ist eine erste Filteraufnahme zur Aufnahme eines dem Strömungseinlass zugeordneten Filters, eines Strömungseinlassfilters und im Austrittskanaleinlass eine zweite Filteraufnahme zur Aufnahme eines dem Strömungseinlass zugeordneten Filters, eines Strömungsauslassfilters angeordnet. Die erste und die zweite Filteraufnahme sind derart ausgebildet, dass bei Verwendung mit der Partikeldetektionseinheit, sofern also die ersten und die zweiten Kopplungsmittel miteinander verbunden sind, die erste Filteraufnahme an den in die Detektionskammer der Partikeldetektionseinheit führenden Strömungseinlass und die zweite Filteraufnahme an den aus der Detektionskammer der Partikeldetektionseinheit führenden Strömungsauslass angrenzt. Dabei ist der Strömungseinlass durch einen von der ersten Filteraufnahme aufgenommenen Strömungseinlassfilter und der Strömungsauslass durch einen von der zweiten Filteraufnahme aufgenommenen Strömungsauslassfilter vollständig bedeckt.

Grundsätzlich kann das Grundgerät eine einzige Detektormodulaufnahme aufweisen. Der Eintrittskanalauslass und der Austrittskanaleinlass sowie die dortigen Filteraufnahmen schließen dann an ebenfalls einen einzigen Eintrittskanal bzw. einen einzigen Austrittskanal an. Als zweckmäßig hat sich aber herausgestellt, dass das Grundgerät mehrere, vorzugsweise zwei Detektormodulaufnahmen und jeweilige Eintrittskanäle und/oder Austrittskanäle mit jeweiligen Filteraufnahmen (zwei pro Detektormodulaufnahme) umfasst.

Durch Entkoppeln des Grundgeräts von der Partikeldetektionseinheit, indem also die Partikeldetektionseinheit aus der Detektormodulaufnahme entnommen wird, sind beide Filteraufnahmen zugänglich, wodurch ein gleichzeitgier Wechsel des Strömungseinlassfilters und des Strömungsauslassfilters ermöglicht wird. Vorzugsweise sind die jeweiligen Filteraufnahmen baugleich mit identischen Abmessungen, sodass darin grundsätzlich identische Filter anordenbar sind. Der den Strömungseinlass bedeckende Filter ist dann als Strömungseinlassfilter und der (identische) den Strömungsauslass bedeckende Filter als Strömungsauslassfilter definiert. Hierdurch ist ein versehentliches Vertauschen der Filter ausgeschlossen, wodurch Wartungsarbeiten oder Filterwechsel weiter vereinfacht werden.

Nach einer vorteilhaften Ausführungsform des erfindungsgemäßen Grundgeräts sind der aus dem Eintrittskanal führende Eintrittskanalauslass und der in den Austrittskanal führende Austrittskanaleinlass an derselben Innenseite der Detektormodulaufnahme, insbesondere die dortigen Gehäuseinnenflächen der Detektormodulaufnahme durchsetzend und/oder in einer gemeinsamen Ebene liegend, zueinander benachbart angeordnet und parallel zueinander ausgerichtet.

Bei dieser Ausführungsform ist es vorteilhaft, wenn die Partikeldetektionseinheit eine der Innenseite entsprechende Vorderseite mit komplementär zum Eintrittskanalauslass angeordnetem Strömungseinlass und komplementär zum Austrittskanaleinlass angeordnetem Strömungsauslass aufweist, die bei miteinander verbundenen Kopplungsmitteln parallel zur Innenseite der Partikeldetektionseinheit verläuft. Vorzugsweise entspricht der Abstand zwischen dem Eintrittskanalauslass und dem Austrittskanaleinlass dem Abstand zwischen dem Strömungseinlass und dem Strömungsauslass. Die jeweiligen Querschnitte des Strömungseinlasses und des Eintrittskanalauslasses bzw. des Strömungsauslasses und des Austrittskanaleinlasses können dann zueinander fluchtend und aneinander angrenzend ausgerichtet werden.

Bei einer optionalen Erfindungsgestaltung sind der in den Eintrittskanal führende Gehäuseeinlass und der aus dem Austrittskanal führende Gehäuseauslass an gegenüberliegenden Seiten, des Grundgeräts, insbesondere einander gegenüberliegende Außenflächen des Außengehäuses durchsetzend, angeordnet. Eine Fluidströmung tritt dann in einer Strömungsrichtung über den Gehäuseeinlass in den Eintrittskanal ein und in derselben Strömungsrichtung über den Gehäuseauslass aus dem Austrittskanal wieder aus.

Optional oder in Weiterbildung dieser Erfindungsausgestaltung können die erste Filteraufnahme und die zweite Filteraufnahme jeweils zur Umlenkung einer entlang des Eintrittskanals bzw. entlang des Austrittskanals verlaufenden Fluidströmung ausgebildet sein. Die Fluidströmung tritt dann in einer dritten Strömungsrichtung über den Gehäuseeinlass in den Eintrittskanal ein und in einer ersten Strömungsrichtung über den Eintrittskanalauslass aus dem Eintrittskanal aus sowie in einer zweiten Strömungsrichtung über den Austrittskanaleinlass in den Austrittskanal ein und in einer vierten Strömungsrichtung über den Gehäuseauslass aus dem Austrittskanal aus. Vorzugsweise sind die dritte und die vierte Strömungsrichtung gleichgerichtet, wohingegen die erste und die zweite Strömungsrichtung parallel zueinander verlaufen, jedoch entgegengerichtet sind. Dabei kann es zweckmäßig sein, dass die erste Strömungsrichtung, mit der eine Fluidströmung den Eintrittskanalauslass passiert, derjenigen Strömungsrichtung entspricht, mit der dieselbe Fluidströmung über den Strömungseinlass in die Partikeldetektionseinheit eintritt und die zweite Strömungsrichtung, mit der eine Fluidströmung den Austrittskanaleinlass passiert, derjenigen Strömungsrichtung entspricht, mit der dieselbe Fluidströmung über den Strömungsauslass aus der Partikeldetektionseinheit austritt.

Durch eine Umlenkung der Strömung oder Änderung der Strömungsrichtung, vorzugsweise um etwa 90°, innerhalb der Filteraufnahmen bzw. direkt innerhalb der darin angeordneten Filter lässt sich eine verbesserte Filterwirkung erzielen. Indem die Filteraufnahmen direkt im Eintrittskanalauslass bzw. Austrittskanaleinlass ausgebildet sind, können diese rahmenlos konstruiert sein. Im Betrieb eines Ansaugpartikelerkennungssystems ist dessen Rohr- und/oder Schlauchleitung mit dem Gehäuseeinlass des Grundgeräts fluidleitend verbunden. Die entlang der Rohr- und/oder Schlauchleitung erzeugte Fluidströmung tritt über den Gehäuseauslass in den Eintrittskanal ein und wird über den Eintrittskanalauslass, die dortige erste Filteraufnahme passierend, und den Strömungseinlass in die Partikeldetektionseinheit geführt. Nach Durchströmen der Partikeldetektionseinheit verlässt die Fluidströmung diese über den Strömungsauslass, tritt über den Austrittskanaleinlass, die dortige zweite Filteraufnahme passierend, in den Austrittskanal ein und wird an dessen Ende, über den Gehäuseauslass, üblicherweise in die Umgebung entlassen.

Zur Erzeugung einer solchen Fluidströmung kann das Ansaugpartikelerkennungssystem ein Strömungsmittel aufweisen. Nach einer Erfindungsvariante ist das Strömungsmittel im Gehäuse des Grundgeräts angeordnet, wobei das Grundgerät dann eine Strömungsmittelaufnahme zur Aufnahme eines Strömungsmittels, wie einer Pumpe, eines Gebläses oder eines Lüfters, aufweist, die innerhalb des mindestens einen Austrittskanals, zwischen dem Austrittskanaleinlass und dem Gehäuseauslass angeordnet ist. Alternativ besteht aber auch die Möglichkeit, dass die Strömungsmittelaufnahme zwischen dem Gehäuseeinlass und dem Eintrittskanalauslass platziert ist. Bei einer optionalen Ausführung des Grundgeräts mit mehreren Detektormodulaufnahmen und mehreren Eintritts- bzw. Austrittskanälen sind je nach Platzierung der Strömungsmittelaufnahme alle Eintrittskanäle bzw. alle Austrittskanäle fluidleitend an diese angeschlossen.

Zur örtlichen Fixierung von in den Filteraufnahmen angeordneten Filtern sind nach einer anderen Erfindungsvariante innerhalb des Eintrittskanals die erste Filteraufnahme begrenzende Rückhaltemittel und innerhalb des Austrittskanals die zweite Filteraufnahme begrenzende Rückhaltemittel angeordnet. Bspw. sind die Rückhaltemittel als mehrere, schmale Finnen ausgebildet, wodurch einerseits eine sichere Fixierung eines in der Filteraufnahme angeordneten Filters erzielt und andererseits der durch die Rückhaltemittel erzeugte Strömungswiderstand minimiert wird.

Vorzugsweise sind innerhalb der ersten Filteraufnahme ein den Querschnitt des Eintrittskanalauslasses ausfüllender Strömungseinlassfilter und innerhalb der zweiten Filteraufnahme ein den Querschnitt des Austrittskanaleinlasses ausfüllender Strömungsauslassfilter angeordnet.

Die Filter können aus einem elastischen Material, bspw. einem grobporigen Schaumstoff hergestellt sein. Vorzugsweise entsprechen Geometrie und Abmessungen der Filter der Geometrie und den Abmessungen der jeweiligen Filteraufnahme. Dabei kann sich die Geometrie der Filter und der Filteraufnahmen aus den Abmessungen des Eintrittskanals bzw. Austrittskanals und der Querschnittsfläche des Eintrittskanalauslasses bzw. des Austrittskanaleinlasses ergeben. Bspw. können die Filter im Falle eines Eintritts-bzw. Austrittskanals mit rechteckiger Querschnittsfläche quaderförmig sein, und im Falle eines Eintritts- bzw. Austrittskanals mit kreisförmiger Querschnittsfläche zylinderförmig. Besonders vorteilhaft ist dabei, wenn die Filter, also der dem Strömungseinlass zugeordnete Strömungseinlassfilter und der dem Strömungsauslass zugeordnete Strömungsauslassfilter sowie die jeweiligen Filteraufnahmen identisch sind, um Verwechslungen beim Einsetzen oder Wechseln der Filter auszuschließen.

Optional stellt das Grundgerät einen Bestandteil eines Ansaugpartikelerkennungssystems dar. Das Ansaugpartikelerkennungssystem weist mindestens eine Rohr- und/oder Schlauchleitung auf, die über eine oder mehrere Ansaugöffnungen in einen oder mehrere Überwachungsbereiche mündet. Der mindestens eine Gehäuseeinlass des Außengehäuses des Grundgeräts ist mit der mindestens einen Rohr- und/oder Schlauchleitung des Ansaugpartikelerkennungssystems verbunden, wobei das Grundgerät ein Strömungsmittel, wie eine Pumpe, ein Gebläse oder einen Lüfter, zur Erzeugung einer Fluidströmung, ausgehend von der einen oder den mehreren Ansaugöffnungen bis zum Gehäuseauslass des Außengehäuses, umfasst.

Schließlich wird die eingangs gestellte Erfindungsaufgabe auch durch einen Modulsatz für ein Ansaugpartikelerkennungssystem gelöst. Der Modulsatz umfasst ein Grundgerät nach einer der zuvor beschriebenen Ausführungsformen und mindestens eine Partikeldetektionseinheit nach einer der weiter oben beschrieben Varianten sowie mindestens einen Strömungseinlassfilter und mindestens einen Strömungsauslassfilter. Das Grundgerät und die mindestens eine Partikeldetektionseinheit können über erste und zweite Kopplungsmittel lösbar miteinander verbunden werden.

Der Strömungseinlassfilter und der Strömungsauslassfilter sind innerhalb einer jeweiligen, an einen Strömungseinlass bzw. einen Strömungsauslass der Partikeldetektionseinheit angrenzenden ersten bzw. zweiten Filteraufnahme des Grundgeräts angeordnet. Die Filteraufnahmen grenzen dabei derart an den Strömungseinlass bzw. den Strömungsauslass an, dass sofern die ersten und zweiten Kopplungsmittel miteinander verbunden sind, der Strömungseinlass vollständig durch den Strömungseinlassfilter und der Strömungsauslass vollständig durch den Strömungsauslassfilter bedeckt ist. Sofern die ersten und zweiten Kopplungsmittel nicht miteinander verbunden sind, wenn also die Partikeldetektionseinheit und das Grundgerät nicht miteinander gekoppelt sind, ist die jeweilige Filteraufnahme zur Entnahme und/oder zum Wechsel und/oder zum Reinigen des Strömungsauslassfilters und/oder des Strömungseinlassfilters zugänglich.

In optionaler und bevorzugter Variante umfasst der Modulsatz zwei Partikeldetektionseinheiten, die über jeweilige erste Kopplungsmittel mit jeweiligen zweiten Kopplungsmitteln eines einzigen Grundgeräts gekoppelt sind. Entsprechend weist das Grundgerät in dieser Variante zwei erste Filteraufnahmen und zwei zweite Filteraufnahmen auf. Der Modulsatz umfasst dann insgesamt zwei Strömungseinlassfilter und zwei Strömungsauslassfilter. Bei Verwendung mit einem Ansaugpartikelerkennungssystem kann dann jede der Partikeldetektionseinheiten einer jeweiligen Rohr- und/oder Schlauchleitung zugeordnet sein, indem das Grundgerät über jeweilige Gehäuseeinlässe an die Rohr- und/oder Schlauchleitungen angeschlossen ist, sodass diese über jeweils einen Eintrittskanal fluidleitend mit der Partikeldetektionseinheit verbunden sind. Die Verwendung zweier oder mehrerer Partikeldetektionseinheiten in einem Grundgerät ermöglicht eine bedarfsweise, modulare Anpassung an die gerade vorliegenden Überwachungserfordernisse.

Weitere Einzelheiten, Merkmale, Merkmals(unter)kombinationen, Vorteile und Wirkungen auf Basis der Erfindung ergeben sich aus der nachfolgenden Beschreibung eines bevorzugten Ausführungsbeispiels der Erfindung und den Zeichnungen. Diese zeigen in
- Fig. 1: eine perspektivische Darstellung einer beispielhaften Ausführungsform einer erfindungsgemäßen Partikeldetektionseinheit,
- Fig. 2: einen Teil des Gehäuses der Partikeldetektionseinheit aus Figur 1 mit einer strömungskanalartig ausgebildeten Detektionskammer in perspektivischer Ansicht,
- Fig. 3: eine perspektivische, beispielhafte Darstellung eines erfindungsgemäßen Modulsatzes, mit einer Innenansicht eines Grundgeräts und einer damit gekoppelten Partikeldetektionseinheit,
- Fig. 4: den Modulsatz aus Figur 3 in einer Schnittdarstellung, und in
- Fig. 5: eine schematische Schnittdarstellung einer mit einem Grundgerät gekoppelten Partikeldetektionseinheit in beispielhafter Ausführung.

Die Figuren sind lediglich beispielhafter Natur und dienen nur dem Verständnis der Erfindung. Die gleichen Elemente sind mit denselben Bezugszeichen versehen.

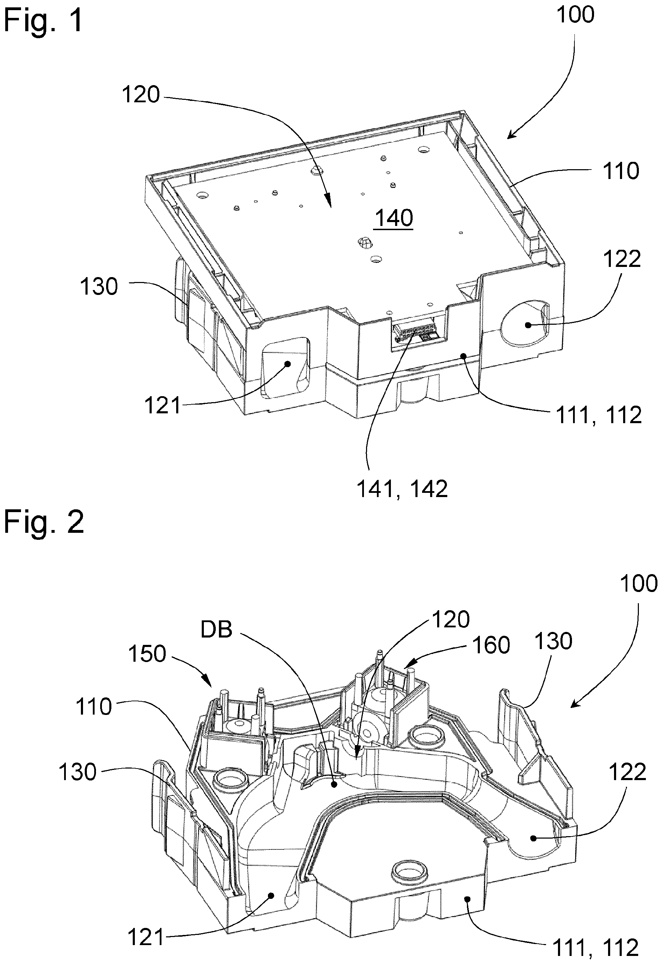

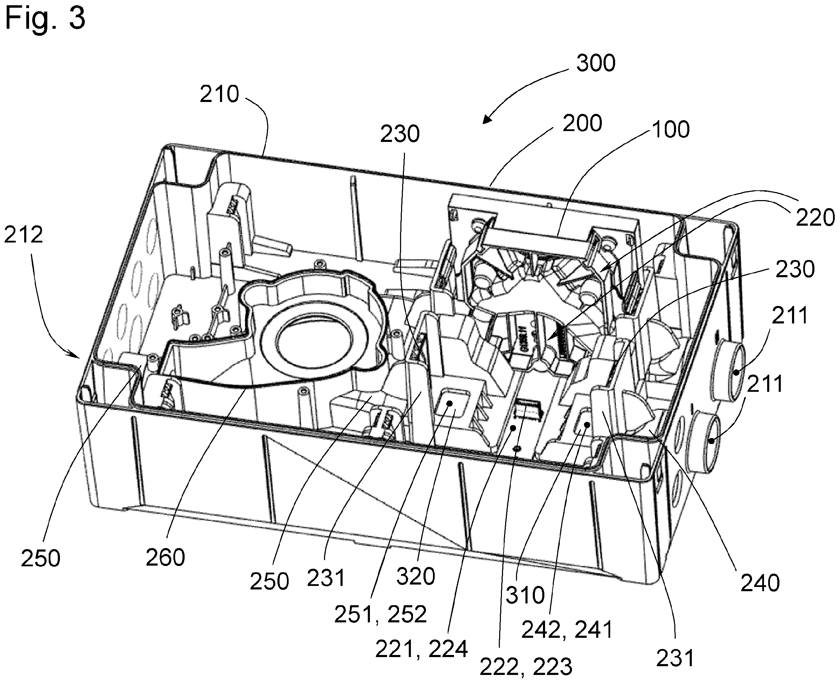

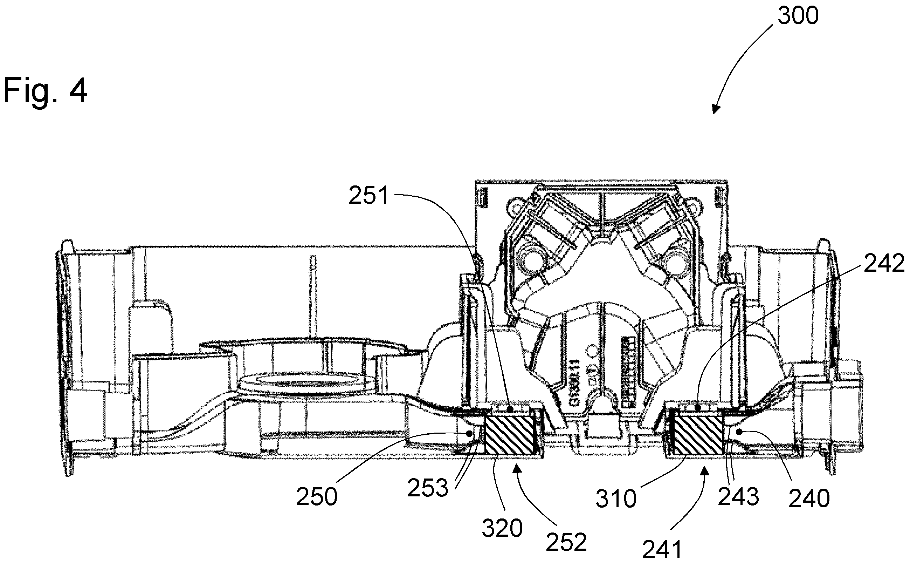

Die Figur 1 zeigt eine perspektivische Darstellung einer beispielhaften Ausführungsform einer erfindungsgemäßen Partikeldetektionseinheit 100, die zur Verwendung mit einem erfindungsgemäßen Grundgerät 200 (s. Figur 3) für ein Ansaugpartikelerkennungssystem 400 (s. Figur 4) geeignet ist. Die Partikeldetektionseinheit 100 umfasst ein in diesem Beispiel zweiteiliges Gehäuse 110 und eine davon umgebene Detektionskammer 120 mit einem Strömungseinlass 121 und einem Strömungsauslass 122. Zur Verwendung mit dem Grundgerät 200 umfasst die Partikeldetektionseinheit 100 ferner erste Kopplungsmittel 130, die mit zweiten Kopplungsmitteln 230 des Grundgeräts 200 lösbar verbunden werden können. Vorzugsweise ist die Verbindung als Formschluss realisiert, bspw. sind die ersten Kopplungsmittel 130 im sogenannten "Click und Release-Design", als elastisch verformbare Schnappmittel konstruiert, die in die zweiten Kopplungsmittel 230 formschlüssig eingeschnappt und darin verrastet werden.

Der Strömungseinlass 121 und der Strömungsauslass 122 sind an derselben Seite der Partikeldetektionseinheit 100, nämlich an deren Vorderseite 111, die dortigen Gehäuseaußenflächen durchsetzend zueinander benachbart angeordnet. Der Strömungseinlass 121 und der Strömungsauslass 122 sind parallel, in einer gemeinsamen Ebene liegend zueinander ausgerichtet, d. h., dass die jeweiligen Querschnittsflächen durchströmende Fluidströmungen F zueinander parallel verlaufen. Ebenfalls an der Vorderseite 111 der Partikeldetektionseinheit 100, jedoch außerhalb dieser gemeinsamen Ebene, an einer daraus hervorragenden Gehäuseaußenfläche, ist ein drittes Kopplungsmittel 142 angeordnet. Dieses umfasst zu einer Leiterplatte 140 der Partikeldetektionseinheit 100 führende elektrische Anschlüsse 141, die wiederum mit elektrische Anschlüssen 223 des Grundgeräts 200 signalleitend verbindbar sind, indem das dritte Kopplungsmittel 142 mit einem vierten Kopplungsmittel 222 des Grundgeräts 200 verbunden wird. Durch die in unterschiedlichen Ebenen angeordneten Gehäuseaußenflächen weist die Vorderseite 111 der Partikeldetektionseinheit 100 ein erstes, positives Flächenprofil 112 mit trapezförmigem Verlauf auf.

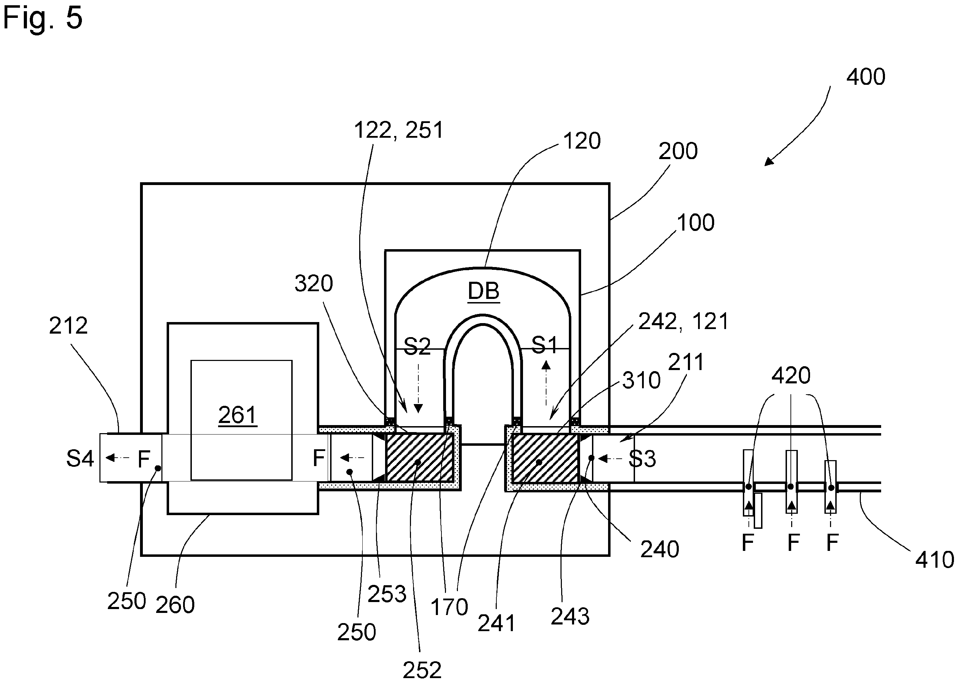

In der Figur 2, die ebenfalls die Partikeldetektionseinheit 100 aus Figur 1 in perspektivischer Ansicht zeigt, ist ein Teil des Gehäuses 110 ausgeblendet um einen Blick ins Innere zu ermöglichen. Gut zu erkennen ist die zwischen dem Strömungseinlass 121 und dem Strömungsauslass 122 verlaufende Detektionskammer 120, die im hier gezeigten Ausführungsbeispiel in der Art eines U-förmigen bzw. doppelt gebogenen Strömungskanals realisiert ist. Der Strömungseinlass 121 schließt dabei an einen ersten U-Schenkel und der Strömungsauslass 122 an den zweiten U-Schenkel an. Im zwischen den beiden U-Schenkeln liegenden Bereich der Detektionskammer 120 ist der eigentliche Detektionsbereich DB, der durch Überlagerung von Lichtstrahlen eines Lichtsenders 150 und des Einfallsbereichs eines Lichtempfängers 160 definiert ist, angeordnet. Eine über den Strömungseinlass 121 eintretende Fluidströmung F wird innerhalb der Detektionskammer 120 zweifach umgelenkt, vom Strömungseinlass 121 kommend um etwa 90° in Richtung des Detektionsbereichs DB und nach Durchströmen des Detektionsbereichs DB erneut um etwa 90° in Richtung des Strömungsauslasses 122. Die ersten Kopplungsmittel 130, der Strömungseinlass 121 und der Strömungsauslass 122 sind dabei so ausgebildet, dass sofern die Partikeldetektionseinheit 100 mit dem Grundgerät 200 verbunden ist, deren Querschnitte von in Filteraufnahmen 241, 252 des Grundgeräts 200 angeordneten Filtern 310, 320 vollständig bedeckt sind (s. Figur 5)

Der Figur 3 kann eine beispielhafte, perspektivische Darstellung eines erfindungsgemäßen Modulsatzes 300, mit einer Innenansicht eines Grundgeräts 200, einer damit gekoppelten Partikeldetektionseinheit 100 sowie einem Strömungseinlassfilter 310 und einem Strömungsauslassfilter 320 entnommen werden. Das Außengehäuse 210 des Grundgeräts 200 ist zweiteilig, wobei der Deckel in der vorliegenden Darstellung ausgeblendet ist, um einen besseren Blick ins Innere zu erlauben. Außen am Außengehäuse 210, an einer der Querseiten sind zwei außenliegende oder externe Gehäuseeinlässe 211, die dortige Gehäuseaußenfläche durchsetzend, zueinander benachbart angeordnet. An der gegenüberliegenden Querseite ist ein außenliegender oder externer Gehäuseauslass 212, ebenfalls die dortige Gehäuseaußenfläche durchsetzend angeordnet. An die Gehäuseeinlässe 211 können jeweilige Rohr- und/oder Schlauchleitungen 410 eines Ansaugpartikelerkennungssystems 400 (s. Figur 5) fluidleitend angeschlossen werden, der Gehäuseauslass 212 mündet vorzugsweise in die (Außen-)Umgebung.

Innerhalb des Außengehäuses 210 umfasst das Grundgerät 200, in dieser Ausführungsform, zwei Detektormodulaufnahmen 220, auch als Steckplätze bezeichnet. Eine der Detektormodulaufnahmen 220 ist "belegt", d. h. mit einer Partikeldetektionseinheit 100 gekoppelt und die andere Detektormodulaufnahme 200 ist "frei", kann also bedarfsweise mit einer Partikeldetektionseinheit 100 gekoppelt werden. Jede der Detektormodulaufnahmen 220 umfasst zweite Kopplungsmittel 230, die als die ersten Kopplungsmittel 130 der Partikeldetektionseinheit 100 formschlüssig aufnehmende und verrastende Aufnahmemittel ausgebildet sind. Die zweiten Kopplungsmittel 230 weisen seitliche Führungselemente 231 auf, die sicherstellen, dass die Partikeldetektionseinheit 100 in der korrekten Positionierung in die Detektormodulaufnahme 220 eingeschoben wird. Vorzugsweise wirken die ersten und die zweiten Kopplungsmittel 130, 230 im "Click und Release-Design" zusammen, sodass die Partikeldetektionseinheit 100 einhändig in eine der Detektormodulaufnahmen 220 einrastbar und auch wieder einhändig daraus entnehmbar ist. Die Detektormodulaufnahmen 220 weisen ferner jeweils einen Eintrittskanalauslass 242 und einen Austrittskanaleinlass 251 auf. Die Eintrittskanalauslässe 242 sind über jeweils einen Eintrittskanal 240 mit den Gehäuseeinlässen 211 fluidleitend verbunden. Die Austrittskanaleinlässe 251 führen in einen gemeinsamen Austrittskanal 250 und über eine darin angeordnete Strömungsmittelaufnahme 260 zum Gehäuseauslass 212. Innerhalb eines Eintrittskanalauslasses 242 ist jeweils eine erste Filteraufnahme 241 und innerhalb eines Austrittskanaleinlasses 251 jeweils eine zweite Filteraufnahme 252 ausgebildet, sodass die darin aufgenommenen Filter 310, 320 den Eintrittskanalauslass 242 bzw. den Austrittskanaleinlass 251 vollständig ausfüllen.

In der Figur 4 ist der Modulsatz 300 aus der Figur 3 in einer seitlichen Schnittdarstellung gezeigt, wobei die in der ersten Filteraufnahme 241 bzw. der zweiten Filteraufnahme 252 angeordneten Filter 310, 320 mit schraffierter Schnittfläche verdeutlicht sind. Die Geometrie der Filter 310, 320 bzw. der Filteraufnahmen 241, 252, entspricht der Geometrie der jeweiligen Querschnitte des Eintrittskanals 240 und des Eintrittskanalauslasses 242 bzw. des Austrittskanals 250 und des Austrittskanaleinlasses 251. Im vorliegenden Ausführungsbeispiel sind beide Filter 310, 320 quaderförmig. Gut zu erkennen ist, dass die Filteraufnahmen 241, 252 am Eintrittskanalauslass 242 bzw. am Austrittskanaleinlass 251 durch jeweilige kragen- oder flanschartige Querschnittsverengungen begrenzt werden. In Richtung des Eintrittskanals 240 bzw. in Richtung des Austrittskanals 250 sind die Filteraufnahmen 241, 252 im vorliegenden Ausführungsbeispiel durch mehrere, finnenartige Rückhaltemittel 243, 253 begrenzt.

Zurück zur Figur 3 ist dort zu erkennen, dass der Eintrittskanalauslass 242 und der Austrittskanaleinlass 251 sind an derselben Innenseite 221 der jeweiligen Detektormodulaufnahme 220, die dortigen Gehäuseinnenflächen durchsetzend zueinander benachbart angeordnet sind. Der Eintrittskanalauslass 242 und der Austrittskanaleinlass 251 sind dabei parallel, in einer gemeinsamen Ebene liegend, zueinander ausgerichtet, d. h., dass die jeweiligen Querschnittsflächen durchströmende Fluidströmungen F zueinander parallel verlaufen. Ebenfalls an der Innenseite 221 der Detektormodulaufnahme 200, jedoch außerhalb der gemeinsamen Ebene, an einer davon zurück gesetzten Gehäuseinnenfläche, ist ein viertes Kopplungsmittel 222 vorgesehen. Dieses umfasst elektrische Anschlüsse 223 des Grundgeräts 200, die mit elektrischen Anschlüssen 141 der Partikeldetektionseinheit 100 signalleitend verbindbar sind, indem das vierte Kopplungsmittel 231 mit dem dritten Kopplungsmittel 142 der Partikeldetektionseinheit 100 verbunden wird. Durch die in unterschiedlichen Ebenen angeordneten Gehäuseinnenflächen weist die Innenseite 221 der Detektormodulaufnahme 220 ein zweites, negatives Flächenprofil 224 mit trapezförmigem Verlauf auf. Indem die ersten und die zweiten Kopplungsmittel 130, 230 miteinander verbunden werden, greifen das erste, positive Flächenprofil 112 und das zweite, negative Flächenprofil 224 komplementär ineinander, sodass der Strömungseinlass 111 und der Eintrittskanalauslass 242 bzw. der Strömungsauslass 122 und der Austrittskanaleinlass 251 einander decken und fluchtend aneinander angrenzen. Gleichzeitig wird dabei die Verbindung zwischen den dritten und den vierten Kopplungsmitteln 142, 222 hergestellt, sodass die jeweiligen elektrischen Anschlüsse 141, 223 der Partikeldetektionseinheit 100 bzw. des Grundgeräts 200 signalleitend miteinander verbunden sind. Durch die zweiten Kopplungsmittel 230, deren Führungsschienen 231 und das der Vorderseite 111 der Partikeldetektionseinheit 100 entsprechende, trapezförmige negative Flächenprofil 224 ist die Partikeldetektionseinheit 100 ausschließlich in der korrekten Positionierung bzw. Stellung innerhalb der jeweiligen Detektormodulaufnahme 220 arretierbar. Diese selbstausrichtende Funktion stellt sicher, dass beim Einsetzen der Partikeldetektionseinheit 100 in das Grundgerät 200 deren Strömungseinlass 121 und Strömungsauslass 122 im Betrieb stets vollständig durch in den Filteraufnahmen 241, 252 befindliche Filter 310, 320 bedeckt sind.

Die Strömungsmittelaufnahme 260 ist zur Aufnahme eines Strömungsmittels 261, wie eines Lüfters, einer Pumpe oder eines Gebläses ausgebildet, mit dem im Normalbetrieb eines Ansaugpartikelerkennungssystems 400 eine Fluidströmung F erzeugt wird. Der Verlauf einer solchen Fluidströmung F ist in der schematischen Schnittdarstellung eines Grundgeräts 200 und einer damit gekoppelten Partikeldetektionseinheit 100 in beispielhafter Ausführung gemäß der Figur 5 anhand von Pfeilen veranschaulicht.

Das Ansaugpartikelerkennungssystem 400 weist mindestens eine Rohr- und/oder Schlauchleitung 410 mit mehreren, in jeweilige Überwachungsbereiche mündenden Ansaugöffnungen 420 auf. Die Rohr- und/oder Schlauchleitung 410 ist an einen Gehäuseeinlass 211 des Grundgeräts 200 angeschlossen. Im Normalbetrieb des Ansaugpartikelerkennungssystems 400 erzeugt ein in der Strömungsmittelaufnahme 260 aufgenommenes Strömungsmittel 261 eine über die Ansaugöffnungen 420 in die Rohr- und/oder Schlauchleitung 410 eintretende Fluidströmung F. Die Fluidströmung F verläuft entlang der Rohr- und/oder Schlauchleitung 410 in Richtung des Grundgeräts 200 und tritt über dessen Gehäuseeinlass 211 in einer dritten Strömungsrichtung S3 in den Eintrittskanal 240 ein. Der Querschnitt des Eintrittskanalauslasses 242 verläuft senkrecht zum Querschnitt des Gehäuseeinlasses 211, wobei die Fluidströmung F innerhalb der ersten Filteraufnahme 241 um etwa 90° umgelenkt wird, und den Eintrittskanal 240 über den Eintrittskanalauslass 242 in einer ersten Strömungsrichtung S1 verlässt. Die dritte Strömungsrichtung S3 und die erste Strömungsrichtung S1 verlaufen in etwa senkrecht zueinander, einen Winkel von in etwa 90° miteinander einschließend.

An den Eintrittskanalauslass 242 grenzt der Strömungseinlass 121 der Partikeldetektionseinheit 100 fluchtend an, sodass die Fluidströmung F in derselben Strömungsrichtung S1 über den Strömungseinlass 121 in die Detektionskammer 120 eintritt. Die Detektionskammer 120 folgt einem U-förmigen Verlauf und ist in der Art eines doppelt gebogenen Strömungskanals ausgebildet, sodass die Fluidströmung F darin zweimal, um insgesamt 180° umgelenkt wird. Zunächst erfolgt eine erste Umlenkung um etwa 90° vom Strömungseinlass 121 ausgehend in Richtung des Detektionsbereichs DB und anschließend eine zweite Umlenkung, wiederum um etwa 90° vom Detektionsbereich DB in Richtung aufweisenden Strömungsauslasses 122. Der Strömungseinlass 121 und der Strömungsauslass 122 weisen jeweils eine elastische Dichtung 170 auf. Die Fluidströmung F verlässt die Detektionskammer 120 folglich in einer zweiten Strömungsrichtung S2, wobei die erste Strömungsrichtung S1 und die zweite Strömungsrichtung S2 in etwa zueinander parallel und entgegenrichtet verlaufen sowie einen Winkel von in etwa 180° miteinander einschließen.

An den Strömungsauslass 122 der Partikeldetektionseinheit 100 grenzt der Austrittskanaleinlass 251 des Grundgeräts 200 fluchtend an, sodass die Fluidströmung F in derselben Strömungsrichtung S2 über den Austrittskanaleinlass 251 in den Austrittskanal 250 eintritt. Entlang des Austrittskanals 250 durchströmt die Fluidströmung F die darin angeordnete Strömungsmittelaufnahme 260 bzw. das davon aufgenommene Strömungsmittel 261 und verlässt den Austrittskanal 250 über den Gehäuseauslass 212 in die Umgebung. Der Querschnitt des Gehäuseauslasses 212 verläuft senkrecht zum Querschnitt des Austrittskanaleinlasses 251, wobei die Fluidströmung F innerhalb der zweiten Filteraufnahme 252 um etwa 90° umgelenkt wird, und den Austrittskanal 250 in einer vierten Strömungsrichtung S4 über den Gehäuseauslass 212 verlässt. Die zweite Strömungsrichtung S2 und die vierte Strömungsrichtung S4 verlaufen in etwa senkrecht zueinander, einen Winkel von in etwa 90° miteinander einschließend. Die dritte Strömungsrichtung S3, entlang derer die Fluidströmung F über den Gehäuseeinlass 211 in das Grundgerät 200 eintritt und die vierte Strömungsrichtung S4, entlang derer die Fluidströmung F über den Gehäuseauslass 212 aus dem Grundgerät 200 austritt, verlaufen in etwa in derselben Richtung, einen Winkel von in etwa 0° miteinander einschließend.

Die erste und die zweite Filteraufnahme 241, 252 weisen eine quaderförmige Grundform auf, wobei vier der insgesamt sechs Seiten durch unmittelbar angrenzende Innenflächen des Eintrittskanals 240 bzw. des Austrittskanals 250 begrenzt sind. Die übrigen zwei Seiten dienen als Strömungsquerschnitte, die von der Fluidströmung F durchströmt werden können. Eintritts- bzw. austrittskanalseitig, werden die jeweiligen Querseiten durch dortige finnenartige Rückhaltemittel 243, 253, die vorzugsweise einstückig mit den Innenflächen des Eintritts- bzw. Austrittskanals 240, 250 verbunden sind, begrenzt. Der Eintrittskanalauslass 242 und der Austrittskanaleinlass 251 weisen jeweils eine Auskragung auf die die dortige Begrenzung der ersten und der zweiten Filteraufnahme 241, 252 bildet. Innerhalb der ersten Filteraufnahme 241 ist ein dem Strömungseinlass 121 zugeordneter Strömungseinlassfilter 310 und innerhalb der zweiten Filteraufnahme 252 ein dem Strömungsauslass 122 zugeordneter Strömungsauslassfilter 320 angeordnet. Die beiden Filter 310, 320 sind sowohl hinsichtlich ihrer Beschaffenheit und ihres Materials als auch hinsichtlich ihrer Abmessungen identisch, sodass Verwechslungen ausgeschlossen werden können. Vorzugsweise sind die Filter 310, 320 aus einem elastischen, grobporigen Kunststoff, wodurch ein einfaches Einsetzen in und Entnehmen aus den jeweiligen Filteraufnahmen 241, 252 ermöglicht wird. Zum Einsetzen und Entnehmen der jeweiligen Filter 310, 320, wird zunächst die Partikeldetektionseinheit 100 aus dem Grundgerät 200 entnommen. Anschließend werden die Filter 310, 320, bspw. mit den Fingern, komprimiert oder zusammengedrückt, und durch die mittels der Auskragungen verkleinerten Öffnungen am Eintrittskanalauslass 242 und am Austrittskanaleinlass 251 "durchgequetscht". Im Normalbetrieb, sofern die Partikeldetektionseinheit 100 mit dem Grundgerät 200 gekoppelt ist, tritt die Fluidströmung F über dessen querseitigen Querschnitt in den Strömungseinlassfilter 310 ein und wird aufgrund der Geometrie der ersten Filteraufnahme 241 darin um etwa 90° umgelenkt, wodurch die Filterwirkung verbessert wird. Der längsseitige Querschnitt des Strömungseinlassfilters 310 grenzt an den Strömungseinlass 211 an, sodass dessen Querschnitt wiederum vollständig durch den Strömungseinlassfilters 310 bedeckt ist. Die zwischen Strömungseinlass 211 und Eintrittskanalauslass 242 angeordnete, elastische Dichtung 170 dichtet den Eintrittskanal 240 und die fluidisch daran angeschlossene Detektionskammer 120 gegenüber der umliegenden Umgebung ab, sodass ausschließlich die den Strömungseinlassfilter 310 passierende, gefilterte Fluidströmung F ins Innere der Detektionskammer 120 gelangt. Bei einer Strömungsumkehr, die bspw. zur Überprüfung der Dichtigkeit oder zur Lokalisierung von Brandherden erfolgen kann, fungiert der Strömungsauslassfilter 320 am Strömungsauslass 212 entsprechend. Beide Filter 310, 320 verhindern außerdem das Eindringen von Spinnen oder Insekten, aber auch von sonstigen Verschmutzungen, insbesondere während der Installation, Inbetriebnahme und während Wartungsarbeiten, oder außerhalb der Betriebszeiten, sofern gerade keine Fluidströmung F erzeugt wird.

### Bezugszeichenliste

- 100: Partikeldetektionseinheit
- 110: Gehäuse
- 111: Vorderseite
- 112: positives Flächenprofil
- 120: Detektionskammer
- 121: Strömungseinlass
- 122: Strömungsauslass
- 130: erste Kopplungsmittel
- 140: Leiterplatte
- 141: elektrische Anschlüsse der Leiterplatte
- 142: dritte Kopplungsmittel
- 150: Lichtsender
- 160: Lichtempfänger
- 170: Dichtung

- 200: Grundgerät
- 210: Außengehäuse
- 211: Gehäuseeinlass
- 212: Gehäuseauslass
- 220: Detektormodulaufnahme
- 221: Innenseite
- 222: vierte Kopplungsmittel
- 223: elektrische Anschlüsse des Grundgeräts
- 224: negatives Flächenprofil
- 230: zweite Kopplungsmittel
- 231: Führungselement
- 240: Eintrittskanal
- 241: erste Filteraufnahme
- 242: Eintrittskanalauslass
- 243: Rückhaltemittel der ersten Filteraufnahme
- 250: Austrittskanal
- 251: Austrittskanaleinlass
- 252: zweite Filteraufnahme
- 253: Rückhaltemittel der zweiten Filteraufnahme
- 260: Strömungsmittelaufnahme
- 261: Strömungsmittel

- 300: Modulsatz
- 310: Filter, Strömungseinlassfilter
- 320: Filter, Strömungsauslassfilter

- 400: Ansaugpartikelerkennungssystem
- 410: Rohr- und/oder Schlauchleitung
- 420: Ansaugöffnungen

- DB: Detektionsbereich
- F: Fluidströmung
- S1: erste Strömungsrichtung
- S2: zweite Strömungsrichtung
- S3: dritte Strömungsrichtung
- S4: vierte Strömungsrichtung

## Patentansprüche

1. Partikeldetektionseinheit (100), ausgebildet zur Verwendung mit einem einen Eintrittskanal (240) und einen Austrittskanal (250) aufweisenden Grundgerät (200), insbesondere nach einem der Ansprüche 8 bis 15, für ein Ansaugpartikelerkennungssystem (400), aufweisend
- ein Gehäuse (110), mit einer darin angeordneten Detektionskammer (120), die einen in die Detektionskammer (120) führenden Strömungseinlass (121) und einen aus der Detektionskammer (120) führenden Strömungsauslass (122) umfasst, und
- erste Kopplungsmittel (130) zur lösbaren Verbindung mit zweiten Kopplungsmitteln (230) des Grundgeräts (200), wodurch der Strömungseinlass (121) mit einem Eintrittskanalauslass (242) und der Strömungsauslass (122) mit einem Austrittskanaleinlass (251) des Grundgeräts (200) fluidleitend verbindbar ist,
**dadurch gekennzeichnet, dass**
bei Verwendung mit dem Grundgerät (200), sofern die ersten Kopplungsmittel (130) und die zweiten Kopplungsmittel (230) miteinander verbunden sind, der in die Detektionskammer (120) führende Strömungseinlass (121) an eine im Eintrittskanalauslass (242) des Grundgeräts (200) ausgebildete erste Filteraufnahme (241) zur Aufnahme eines Strömungseinlassfilters (310) und der aus der Detektionskammer (120) führende Strömungsauslass (122) an eine im Austrittskanaleinlass (251) des Grundgeräts (200) ausgebildete zweite Filteraufnahme (252) zur Aufnahme eines Strömungsauslassfilters (320) derart angrenzend ausgebildet ist, dass der Strömungseinlass (121) durch einen von der ersten Filteraufnahme (241) aufgenommenen Strömungseinlassfilter (310) und der Strömungsauslass (122) durch einen von der zweiten Filteraufnahme (242) aufgenommenen Strömungsauslassfilter (320) vollständig bedeckt ist.

2. Partikeldetektionseinheit (100) nach Anspruch 1,
**dadurch gekennzeichnet, dass**
der in die Detektionskammer (120) führende Strömungseinlass (121) und der aus der Detektionskammer (120) führende Strömungsauslass (122) an derselben Seite, der Vorderseite (111) der Partikeldetektionseinheit (100), insbesondere an einer gemeinsamen Gehäuseaußenfläche und/oder in einer gemeinsamen Ebene, zueinander benachbart angeordnet und parallel zueinander ausgerichtet sind.

3. Partikeldetektionseinheit (100) nach Anspruch 1 oder 2,
**dadurch gekennzeichnet, dass**
die Detektionskammer (120) zur Umlenkung einer darin verlaufenden Fluidströmung (F) ausgebildet ist, sodass eine in einer ersten Strömungsrichtung (S1) über den Strömungseinlass (121) in die Detektionskammer (120) eintretende Fluidströmung (F) in einer, der ersten Strömungsrichtung (S1) in etwa entgegengerichteten, zweiten Strömungsrichtung (S2) über den Strömungsauslass (122) aus der Detektionskammer (120) austritt.

4. Partikeldetektionseinheit (100) nach einem der vorhergehenden Ansprüche,
**dadurch gekennzeichnet, dass**
die Detektionskammer (120) einem in etwa U-förmigen Verlauf folgend ausgebildet ist, wobei der Strömungseinlass (121) an einen ersten U-Schenkel anschließt und der Strömungsauslass (122) an einen zweiten U-Schenkel anschließt.

5. Partikeldetektionseinheit (100) nach einem der vorhergehenden Ansprüche,
**dadurch gekennzeichnet, dass**
der Strömungseinlass (121) und der Strömungsauslass (122) jeweils eine mit dem Eintrittskanalauslass (242) bzw. dem Austrittskanaleinlass (251) des Grundgeräts (200) fluiddichtend zusammenwirkende Dichtung (170) aufweisen.

6. Partikeldetektionseinheit (100) nach einem der vorhergehenden Ansprüche,
**dadurch gekennzeichnet, dass**
die Partikeldetektionseinheit (100) eine Leiterplatte (140) umfasst, deren elektrische Anschlüsse (141) mit elektrischen Anschlüssen (223) des Grundgeräts (200) signalleitend verbindbar sind.

7. Partikeldetektionseinheit (100) nach einem der vorhergehenden Ansprüche,
**dadurch gekennzeichnet, dass**
die ersten Kopplungsmittel (130) der Partikeldetektionseinheit (100) mit den zweiten Kopplungsmitteln (230) des Grundgeräts (200) selbstausrichtend verbindbar sind, sodass der in die Detektionskammer (120) der Partikeldetektionseinheit (100) führende Strömungseinlass (121) mit dem Eintrittskanalauslass (242) des Grundgeräts (200) und der aus der Detektionskammer (120) der Partikeldetektionseinheit (100) führende Strömungsauslass (122) mit dem Austrittskanaleinlass (251) des Grundgeräts (200) fluchtend und an die erste bzw. zweite Filteraufnahme (241, 252) angrenzend ausgerichtet sind.

8. Grundgerät (200) für ein Ansaugpartikelerkennungssystem (400), ausgebildet zur Verwendung mit mindestens einer Partikeldetektionseinheit (100) nach einem der vorhergehenden Ansprüche, aufweisend
- ein Außengehäuse (210) mit mindestens einem Gehäuseeinlass (211) zur Verbindung mit einer Rohr- und/oder Schlauchleitung (410) des Ansaugpartikelerkennungssystems (400), und mindestens einem Gehäuseauslass (212), sowie
- mindestens eine Detektormodulaufnahme (220), die zweite Kopplungsmittel (230) zur lösbaren Verbindung mit ersten Kopplungsmitteln (130) der Partikeldetektionseinheit (100) aufweist,
**dadurch gekennzeichnet, dass**
- die mindestens eine Detektormodulaufnahme (220) einen Eintrittskanalauslass (242) und einen Austrittskanaleinlass (251) umfasst,
- das Grundgerät (200) mindestens einen vom Gehäuseeinlass (211) zum Eintrittskanalauslass (242) führenden Eintrittskanal (240) und mindestens einen vom Austrittskanaleinlass (251) zum Gehäuseauslass (212) führenden Austrittskanal (250) aufweist, und
- im Eintrittskanalauslass (242) eine erste Filteraufnahme (241) zur Aufnahme eines Strömungseinlassfilters (310) und im Austrittskanaleinlass (251) eine zweite Filteraufnahme (252) zur Aufnahme eines Strömungsauslassfilters (320) ausgebildet ist, sodass bei Verwendung mit der Partikeldetektionseinheit (100) die erste Filteraufnahme (241) an einen in eine Detektionskammer (120) der Partikeldetektionseinheit (100) führenden Strömungseinlass (121) und die zweite Filteraufnahme (252) an einen aus der Detektionskammer (120) der Partikeldetektionseinheit (100) führenden Strömungsauslass (122) derart angrenzt, dass der Strömungseinlass (121) durch einen von der ersten Filteraufnahme (241) aufgenommenen Strömungseinlassfilter (310) und der Strömungsauslass (122) durch einen von der zweiten Filteraufnahme (242) aufgenommenen Strömungsauslassfilter (320) vollständig bedeckt ist.

9. Grundgerät (200) nach Anspruch 8,
**dadurch gekennzeichnet, dass**
der aus dem Eintrittskanal (240) führende Eintrittskanalauslass (242) und der in den Austrittskanal (250) führende Austrittskanaleinlass (251) an derselben Innenseite (221) der Detektormodulaufnahme (220), insbesondere die dortigen Gehäuseinnenflächen der Detektormodulaufnahme (220) durchsetzend und/oder in einer gemeinsamen Ebene, zueinander benachbart angeordnet und parallel zueinander ausgerichtet sind.

10. Grundgerät (200) nach einem der Ansprüche 8 bis 9,
**dadurch gekennzeichnet, dass**
der in den Eintrittskanal (240) führende Gehäuseeinlass (211) und der aus dem Austrittskanal (250) führende Gehäuseauslass (212) an gegenüberliegenden Seiten des Grundgeräts (200), insbesondere einander gegenüberliegende Außenflächen des Außengehäuses (210) durchsetzend, angeordnet sind, sodass eine Fluidströmung (F) in derselben Strömungsrichtung über den Gehäuseeinlass (211) in den Eintrittskanal (240) ein- und über den Gehäuseauslass (212) aus dem Austrittskanal (250) austritt.

11. Grundgerät (200) nach einem der Ansprüche 8 bis 10,
**dadurch gekennzeichnet, dass**
die erste Filteraufnahme (241) und die zweite Filteraufnahme (252) jeweils zur Umlenkung einer im Eintrittskanal (240) bzw. im Austrittskanal (250) verlaufenden Fluidströmung (F) ausgebildet sind, sodass die Fluidströmung (F) in einer dritten Strömungsrichtung (S3) über den Gehäuseeinlass (211) in den Eintrittskanal (240) eintritt und in einer ersten Strömungsrichtung (S1) über den Eintrittskanalauslass (242) aus dem Eintrittskanal (240) austritt sowie in einer zweiten Strömungsrichtung (S2) über den Austrittskanaleinlass (251) in den Austrittskanal (250) eintritt und in einer vierten Strömungsrichtung (S4) über den Gehäuseauslass (212) aus dem Austrittskanal (250) austritt.

12. Grundgerät (200) nach einem der Ansprüche 8 bis 11,
**dadurch gekennzeichnet, dass**
eine Strömungsmittelaufnahme (260) zur Aufnahme eines Strömungsmittels (261), wie einer Pumpe, eines Gebläses oder eines Lüfters, innerhalb des mindestens einen Austrittskanals (250), zwischen dem Austrittskanaleinlass (251) und dem Gehäuseauslass (212) angeordnet ist.

13. Grundgerät (200) nach einem der Ansprüche 8 bis 12
**dadurch gekennzeichnet, dass**
innerhalb des Eintrittskanals (240) die erste Filteraufnahme (241) begrenzende Rückhaltemittel (243) und innerhalb des Austrittskanals (250) die zweite Filteraufnahme (252) begrenzende Rückhaltemittel (253) angeordnet sind.

14. Grundgerät (200) nach einem der Ansprüche 8 bis 13,
**dadurch gekennzeichnet, dass**
innerhalb der ersten Filteraufnahme (241) ein den Querschnitt des Eintrittskanalauslasses (241) ausfüllender Strömungseinlassfilter (310) und innerhalb der zweiten Filteraufnahme (252) ein den Querschnitt des Austrittskanaleinlasses (251) ausfüllender Strömungsauslassfilter (320) angeordnet ist.

15. Grundgerät (200) nach einem der Ansprüche 8 bis 14,
**dadurch gekennzeichnet, dass**
das Grundgerät (200) Bestandteil eines Ansaugpartikelerkennungssystems (400) ist, mit mindestens einer Rohr und/oder Schlauchleitung (410), die über eine oder mehrere Ansaugöffnungen (420) in einen oder mehrere Überwachungsbereiche mündet, wobei der mindestens eine Gehäuseeinlass (211) des Außengehäuses (210) mit der mindestens einen Rohr- und/oder Schlauchleitung (410) des Ansaugpartikelerkennungssystems (400) verbunden ist, und wobei das Grundgerät (200) ein Strömungsmittel (261), wie eine Pumpe, ein Gebläse oder einen Lüfter, zur Erzeugung einer Fluidströmung (F) ausgehend von der einen oder den mehreren Ansaugöffnungen (420) bis zum Gehäuseauslass (212) des Außengehäuses (200) umfasst.

16. Modulsatz (300) für ein Ansaugpartikelerkennungssystem (400), umfassend ein Grundgerät (200) nach einem der Ansprüche 8 bis 15, mindestens eine Partikeldetektionseinheit (100) nach einem der Ansprüche 1 bis 7 sowie mindestens einen Strömungseinlassfilter (310) und mindestens einen Strömungsauslassfilter (320), wobei das Grundgerät (200) und die mindestens eine Partikeldetektionseinheit (100) über erste und zweite Kopplungsmittel (130, 230) lösbar miteinander verbindbar sind,
**dadurch gekennzeichnet, dass**
der Strömungseinlassfilter (310) und der Strömungsauslassfilter (320) in einer jeweiligen, an einen Strömungseinlass (121) bzw. einen Strömungsauslass (122) der Partikeldetektionseinheit (100) derart angrenzenden ersten bzw. zweiten Filteraufnahme (241, 252) des Grundgeräts (200) angeordnet sind, dass
- sofern die ersten und zweiten Kopplungsmittel (130, 230) miteinander verbunden sind, der Strömungseinlass (121) vollständig durch den Strömungseinlassfilter (310) und der Strömungsauslass (122) vollständig durch den Strömungsauslassfilter (320) bedeckt ist, und
- sofern die ersten und zweiten Kopplungsmittel (130, 230) nicht miteinander verbunden sind, die jeweilige Filteraufnahme (241, 252) zur Entnahme und/oder zum Wechsel und/oder zum Reinigen des Strömungsauslassfilters (310) und/oder des Strömungseinlassfilters (320) zugänglich ist.

17. Modulsatz (300) nach Anspruch 16,
**dadurch gekennzeichnet, dass**
der Modulsatz (300) zwei Partikeldetektionseinheiten (100) umfasst, die über jeweilige erste Koppelmittel (130) mit jeweiligen zweiten Koppelmitteln (230) eines einzigen Grundgeräts (200) gekoppelt sind, wobei das Grundgerät (200) entsprechend zwei erste Filteraufnahmen (241) und zwei zweite Filteraufnahmen (252) aufweist, und der Modulsatz (300) zwei Strömungseinlassfilter (310) und zwei Strömungsauslassfilter (320) umfasst.
